# EUROPEAN PATENT APPLICATION

(11) **EP 2 921 345 A1**
(43) Date of publication of application: **23.09.2015**
(21) Application number: 13855556.0
(22) Date of filing: 15.11.2013
(51) Int. Cl.: B60N 2/68, A47C 7/02, A47C 7/28, B60N 2/16, B60N 2/427, B60N 2/72

(54) **VEHICLE SEAT**

(30) Priority: 16.11.2012 JP 2012252363; 16.11.2012 JP 2012252367; 16.11.2012 JP 2012252383; 16.11.2012 JP 2012252378
(71) Applicant: TS Tech Co., Ltd., Asaka-shi, Saitama 351-0012 (JP)
(72) Inventor: ITO Teppei, Shioya-gun Tochigi 329-1217 (JP)
(74) Representative: Plougmann & Vingtoft A/S
(86) International application number: PCT/JP2013/080865
(87) International publication number: WO 2014/077349

(57) **Abstract**

A vehicle seat includes right and left side frames 20 including first members (main side frames 21) and a second member (lower frame 60) which are joined together by welding, and a first cushion spring 40 run between the right and left first members and configured to receive a load from an occupant. Each of the first members has two first engagement openings 21b, 21c formed therein with which a first engagement portion 41 formed at an end portion of the first cushion spring 40 is engaged. A weld WP joining the first member and the second member is disposed on an imaginary line L extending through the two first engagement openings 21b, 21c.

## Description

### TECHNICAL FIELD

The present invention relates to a vehicle seat.

### BACKGROUND ART

Conventionally, there is known a vehicle seat including a cushion spring extending laterally, and side frames having engagement openings with which both ends of the cushion spring are engaged (for example, Japanese Laid-open Patent Application, Publication No. 2006-96239). In this vehicle seat, the right and left side frames constitute a seat back frame, and each includes a plate frame having an upper portion and a lower portion; the width of the upper portion in the front-rear direction is narrower than that of the lower portion.

### SUMMARY OF THE INVENTION

However, if an engagement opening is formed in the side frame as with the conventional design, there may be a concern that the rigidity in the vicinity of the engagement opening would degrade; it is therefore desirable to improve the rigidity in the vicinity of the engagement opening. In particular, if the both ends of the cushion spring are respectively inserted into and engaged with corresponding two engagement holes, the rigidity may degrade along an imaginary line extending through the two engagement openings; it is therefore desirable to improve the rigidity in this structure.

Further, in the conventional structure, as the upper portion of the plate frame is narrower than the lower portion of the plate frame, it is desirable to improve the rigidity of the upper portion.

In view of the above, it is an object of the present invention to enhance the rigidity in the vicinity of the engagement openings used for attachment of the cushion spring.

Further, it is an object of the present invention to prevent an end of the cushion spring from coming off the engagement opening. Further, it is an object of the present invention to facilitate attachment of the cushion spring to the engagement openings.

Further, it is an object of the present invention to improve the rigidity of the upper portion of the plate frame of which the width in the front-rear direction is narrower than at the lower portion of the plate frame. Further, it is an object of the present invention to improve the rigidity of a portion of the plate frame to which an air bag is attached or in which an opening is formed.

According to the present invention which may solve the aforementioned problem, there is provided a vehicle seat comprising: right and left side frames including first members and a second member which are joined together by welding; and a first cushion spring run between right and left first members and configured to receive a load from an occupant, wherein each of the first members has two first engagement openings formed therein with which a first engagement portion formed at an end portion of the first cushion spring is engaged, and wherein a weld joining the first member and the second member is disposed on an imaginary line extending through the two first engagement openings.

With this configuration, since the weld is disposed on the imaginary line extending through the two first engagement openings, it is possible to prevent the first member from degrading in rigidity along the imaginary line. Accordingly, the rigidity in the vicinity of the first engagement openings can be enhanced.

In the above configuration, it is preferable that an end of the first engagement portion of the first cushion spring and the weld overlap each other as viewed from a lateral direction.

With this configuration, overlapping the end of the first engagement portion of the first cushion spring and the weld as viewed from the lateral direction, *i.e.,* elongating the end of the first engagement portion to the weld makes it possible to prevent the end of the first engagement portion from coming off a first engagement opening.

Further, in the above configuration, it is preferable that the end of the first engagement portion of the first cushion spring is disposed away from and laterally inward relative to the weld.

With this configuration, since the end of the first engagement portion is disposed away from and laterally inward relative to the weld, it is possible to prevent the end of the first engagement portion from interfering with the weld when the end of the first engagement portion is attached to the first engagement openings. Accordingly, the attachment work can be eased.

Further, in the above configuration, it is preferable that the second member has an end edge closer to the first member, and includes a relief portion configured to be recessed away from the first engagement opening and formed at a portion of the end edge which faces the first engagement opening, and that the second member is welded to the first member at the relief portion.

With this configuration, since the second member has an end edge closer to the first member, and includes a relief portion configured to be recessed away from the first engagement opening and formed at a portion of the end edge which faces the first engagement opening, and the welding is performed at the relief portion, it is possible to prevent the weld from closing a part of the first engagement opening. Accordingly, the attachment work for attaching the first engagement portion to the first engagement openings can be eased.

Further, in the above configuration, it is preferable that the second member includes a flange portion protruding laterally inward at a position adjacent to the weld.

With this configuration, since the second member is provided with the flange portion disposed adjacent to the weld, the rigidity in the vicinity of the first engagement opening can be enhanced by the flange portion as well as by the weld. It is therefore possible to further prevent the first member from becoming less rigid along the imaginary line.

Further, in the above configuration, it is preferable that an end of the first engagement portion of the first cushion spring is disposed away from the flange portion and laterally inward relative to the flange portion.

With this configuration, since the end of the first engagement portion of the first cushion spring is disposed away from and laterally inward relative to the flange portion, it is possible to prevent the end of the first engagement portion from interfering with the flange portion when the end of the first engagement portion is attached to the first engagement openings. Accordingly, the attachment work can be eased.

Further, in the above configuration, it is preferable that the right and left side frames constitute a seat back frame, and the first member is a plate frame comprising a side wall portion having an upper portion and a lower portion, a width of the upper portion in a front-rear direction being narrower than that of the lower portion, that the side wall portion includes a laterally inwardly bent rear flange portion formed at a rear end portion thereof, and that the rear flange portion includes a frontward protruding portion configured to protrude frontward, in a region corresponding to the upper portion.

With this configuration, since the rear flange portion corresponding to the narrower upper portion of the side wall portion of the plate frame is provided with the frontward protruding portion configured to protrude frontward, it is possible to enhance the rigidity of the narrower upper portion of the plate frame.

Further, in the above configuration, if the upper portion of the plate frame is joined to an upper frame made of a pipe, it is preferable that at least a portion of the frontward protruding portion is disposed in a position lower than a lower end of the upper frame.

With this configuration in which at least a portion of the frontward protruding portion is disposed in a position lower than the lower end of the upper frame, for example, as compared with the configuration in which the frontward protruding portion is disposed in a position higher than the lower end of the upper frame, the rigidity of the plate frame at a portion which is not joined by the upper frame can be enhanced by the frontward protruding portion.

Further, in the above configuration, it is preferable that at least a portion of the frontward protruding portion is provided in a same height range as that of an air bag attached to the side wall portion.

With this configuration, since at least a portion of the frontward protruding portion is provided in the same height range as that of the air bag, the rigidity of the side wall portion can be enhanced at a portion where the air bag is attached to the side wall portion.

Further, in the above configuration, if a rod-like member for attachment of the air bag is welded to the rear flange portion, it is preferable that the frontward protruding portion is provided adjacent to a weld joining the rod-like member and the rear flange portion.

With this configuration, since the frontward protruding portion is provided adjacent to the weld joining the rod-like member and the rear flange portion, the rigidity of the frontward protruding portion can be enhanced by the rod-like member. Accordingly, the rigidity of the upper portion of the plate frame can be enhanced further.

Further, in the above configuration, if the vehicle seat comprises a second cushion spring run between the side wall portions of the right and left plate frames and configured to receive a load from the occupant, and each of the side wall portions has two second engagement openings formed therein with which a second engagement portion formed at an end portion of the second cushion spring is engaged, it is preferable that at least a portion of the frontward protruding portion is provided in a same height range as that of the two second engagement openings.

With this configuration in which at least a portion of the frontward protruding portion is provided in the same height range as that of the two second engagement openings, the rigidity in the vicinity of the second engagement openings can be enhanced by the frontward protruding portion.

Further, in the above configuration, if the side wall portion has an attachment hole formed therein for attachment of an air bag, it is preferable that the attachment hole is disposed at a position away from an imaginary line extending through the two second engagement openings.

With this configuration in which the attachment hole is disposed at a position away from the imaginary line extending through the two second engagement openings, the rigidity in the vicinity of the second engagement openings can be enhanced.

Further, in the above configuration, the frontward protruding portion may be formed in a predetermined range defined by an upper end of the rear flange portion.

With this configuration in which the frontward protruding portion is formed in a predetermined range defined by the upper end of the rear flange portion, the rigidity in the vicinity of the upper end of the plate frame can be enhanced.

### BRIEF DESCRIPTION OF DRAWINGS

FIG. 1 is a perspective view of a car seat as an example of a vehicle seat according to one embodiment.
FIG. 2 is a perspective view of a seat frame embedded in the car seat.
FIG. 3 is a perspective view showing a structure in the vicinity of a weld joining a main side frame and a lower side frame portion.
FIG. 4 is a sectional view taken along the line I-I of FIG. 3.
FIG. 5 is a sectional view schematically showing a first cushion spring along the horizontal plane.
FIG. 6 is a front view of an upper flange portion of a lower frame and the first cushion spring as viewed from the front side.
FIG. 7 is a side view of the main side frame as viewed from the laterally inner side.
FIG. 8 is a sectional view taken along the line II-II of FIG. 7.
FIG. 9 is a side view of a frontward protruding portion according to the first modification.
FIG. 10 is a side view of the frontward protruding portion according to the second modification.
FIG. 11 is an enlarged perspective view of a seat cushion frame of a seat frame embedded in the car seat according to a modified embodiment.
FIG. 12 is a perspective view of a seat cushion pad as viewed from the lower side.
FIG. 13 is a sectional view showing the structure around a pad-side through-opening of the seat cushion pad.
FIG. 14 schematically shows a height adjustment mechanism and includes: (a) a side view showing a state in which a front link is raised, and (b) a side view showing a state in which the front link is laid down.
FIG. 15 is a perspective view showing an embodiment in which a bead portion is provided around a through-opening.
FIG. 16 is a perspective view showing an embodiment in which the bead portion is formed in an annular shape.
FIG. 17 shows a structure around a pan frame-side through-opening and includes: (a) a sectional view according to the first modification, and (b) a sectional view according to the second modification.
FIG. 18 is a sectional view showing the structure around the pan frame-side through-opening according to the third modification.

### DESCRIPTION OF EMBODIMENTS

Next, one embodiment of the present invention will be described in detail with reference made to the drawings where necessary. In the following description, the overall structure of the car seat (vehicle seat) will be described briefly, and then characterizing features of the present invention will be described in detail.

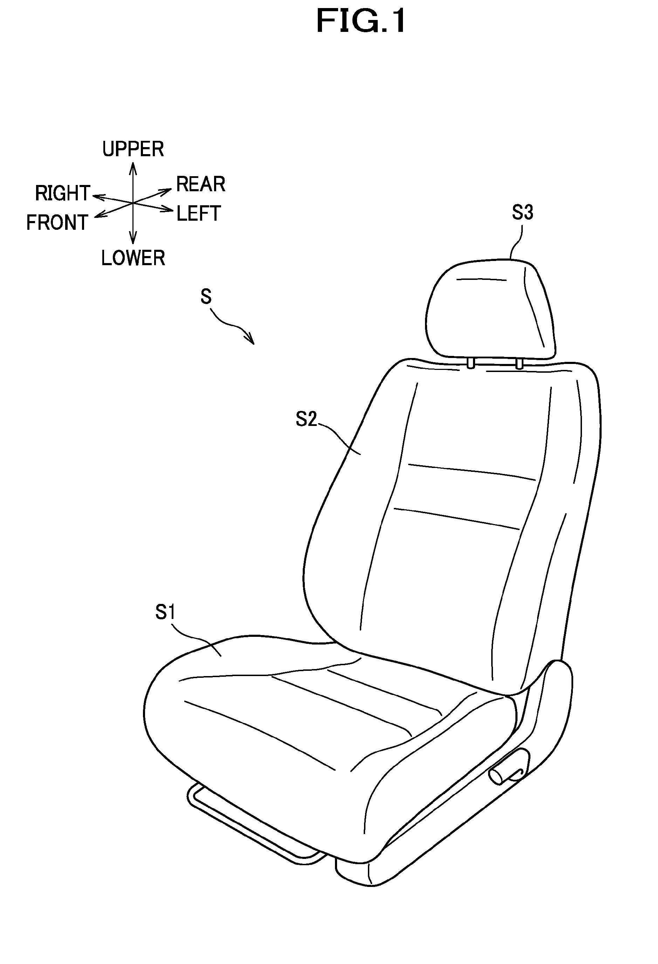

As seen in FIG. 1, the car seat S is a seat used in a driver's seat of an automobile, and mainly includes a seat cushion S1, a seat back S2, and a headrest S3.

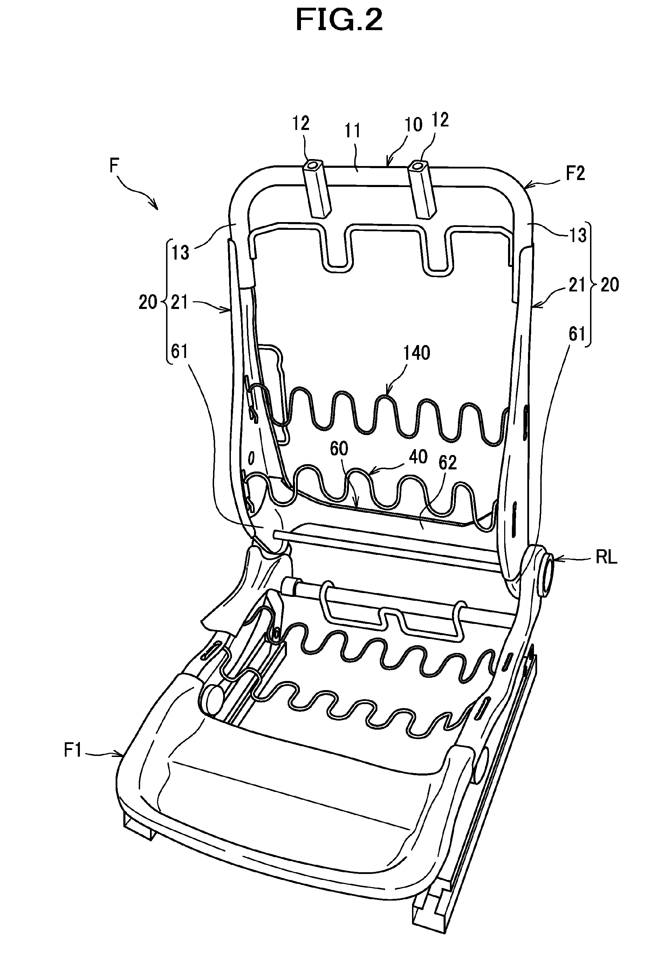

A seat frame F as shown in FIG. 2 is embedded in the seat cushion S1 and the seat back S2. The seat frame F mainly includes a seat cushion frame F1 constituting a frame of the seat cushion S1, and a seat back frame F2 constituting a frame of the seat back S2. The seat cushion S1 is configured such that the seat cushion frame F1 is covered with a seat cushion pad made of a cushion material such as urethane foam, and a skin material made of synthetic leather or fabric. The seat back S2 is configured such that the seat back frame F2 is covered with a seat back pad made of a cushion material, and a skin material made of synthetic leather or fabric.

A lower portion of the seat back frame F2 is rotatably connected to a rear portion of the seat cushion frame F1 via a reclining mechanism RL. Accordingly, the seat back S2 is tiltable in the front-rear direction with respect to the seat cushion S1.

In the description, the front/rear (frontward/rearward), right/left (lateral), and upper/lower directions are designated as from the view point of an occupant seated on the car seat S without tilting down the seat back S2 by the reclining mechanism RL.

The seat back frame F2 mainly consists of an upper frame 10, right and left main side frames 21 as an example of a first member and a plate frame, and a lower frame 60 as an example of a second member; the upper frame 10, the right and left main side frames 21, and the lower frame 60 are joined together, for example, by welding to thereby form a frame-like configuration. A first cushion spring 40 and a second cushion spring 140, which are configured to receive a load from the occupant, are disposed at a center and at a lower side to run between the right and left main side frames 21.

The upper frame 10 is formed by bending a pipe material into an approximately U-shape configuration and includes a lateral pipe portion 11 extending in the right-left direction, and a pair of right and left support brackets 12 for attachment of the headrest S3 are fixed by welding to the front side of the lateral pipe portion 11. Right and left vertical pipe portions 13 of the upper frame 10 extend in the upper-lower direction; right and left main side frames 21 are joined to lower portions of the vertical pipe portions 13 and made into integral parts to thereby form the right and left side frames 20.

The side frames 20 consists of the right and left vertical pipe portions 13 as described above, the right and left main side frames 21, and lower side frame portions 61 configured as both end portions of the lower frame 60.

The right and left main side frames 21 are members for constituting middle portions of the side frames 20, and each made by press working sheet metal to have an approximately U-shaped cross section; the right and left main side frames 21 are arranged laterally opposite to each other. The main side frame 21 is connected to the vertical pipe portion 13 with its upper portion holding the vertical pipe portion 13, and the lower portion of the main side frame 21 protrudes frontward farther than the upper portion of the main side frame 21 to form a bulging portion.

The lower side frame portion 61 is formed at each end of a main body portion 62 for constituting a laterally middle portion of the lower frame 60 in such a manner as to extend frontward from the end of the main body portion 62. The lower side frame portion 61 is joined to the main side frame 21 by welding, with its upper end portion being held by a lower portion of the main side frame 21.

### <Details of Weld connecting Main side frame 21 and Lower side frame portion 61>

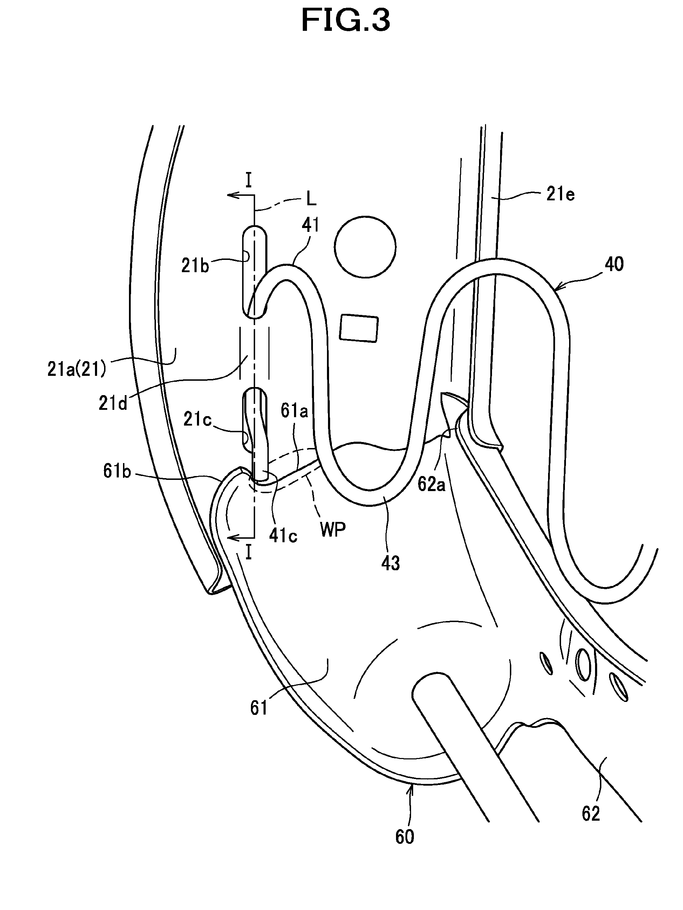

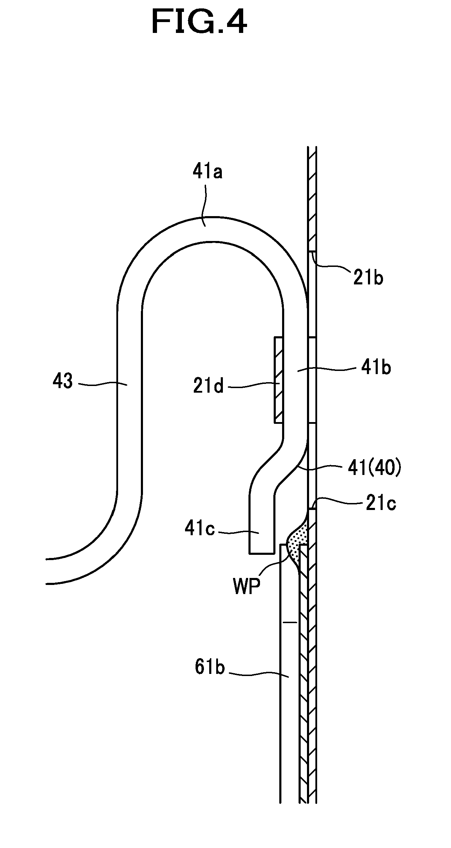

As seen in FIGS. 3 and 4, two first engagement openings 21b, 21c are formed in a lower end side (in the vicinity of the weld WP) of a side wall portion 21a of the main side frame 21; a first engagement portion 41 formed at an end portion of the first cushion spring 40, which is located below the second cushion spring 140, is engaged with the first engagement openings 21b, 21c. The two first engagement openings 21b, 21c are arranged in line approximately in the upper-lower direction, and the weld WP (thickened portion) joining the main side frame 21 and the lower side frame portion 61 is disposed on an imaginary line L extending through these first engagement openings 21b, 21c.

With this configuration in which the weld WP is disposed on the imaginary line L extending through the two first engagement openings 21b, 21c, it is possible to prevent the main side frame 21 from degrading in rigidity along the imaginary line L. Accordingly, the rigidity in the vicinity of the first engagement openings 21b, 21c can be enhanced.

Further, a recess portion 21 d is formed between the two first engagement openings 21b, 21c; the recess portion 21d is recessed laterally inward. The recess portion 21d is formed in an approximately semi-cylindrical shape, and extends from the upper first engagement opening 21b to the lower first engagement opening 21c.

With this configuration in which the recess portion 21d is formed between the two first engagement openings 21b, 21c, the protrusion distance (protrusion distance is zero in this embodiment) by which the first engagement portion 41 of the first cushion spring 40 protrudes outward from the outer surface of the main side frame 21 can be reduced. It is therefore possible to reduce the size of the car seat S in the lateral direction.

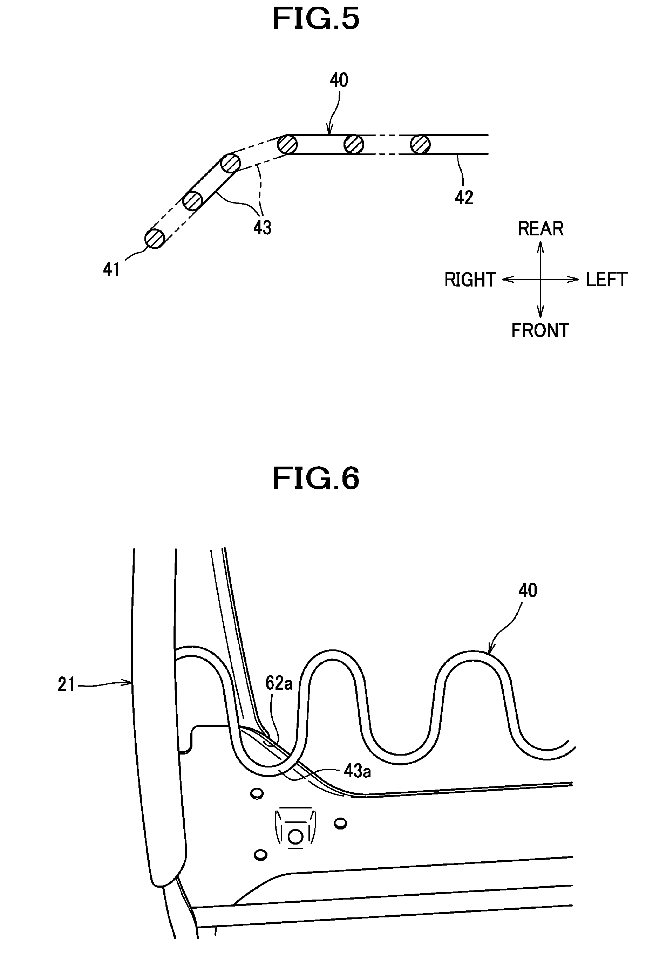

The first cushion spring 40 is an S-shaped spring (wave spring or zigzag spring) extending laterally with a plurality of turns made in the upper-lower direction; as seen in FIG. 5, the S-shaped spring includes a middle portion 42 extending in the lateral direction, slanted portions 43 extending obliquely frontward (laterally outward and frontward) from right and left ends (only one end is shown in the figure) of the middle portion 42, and first engagement portions 41 provided at laterally outer ends of the slanted portions 43.

With this configuration in which the both end sides of the first cushion spring 40 are formed as the slanted portions 43, the first cushion spring 40 can fit the lumbar region of the occupant, so that the lumbar region of the occupant can be appropriately supported by the first cushion spring 40.

If the both end sides of the first cushion spring 40 are formed as the slanted portions 43, the slanted portion 43 approaches an upper flange portion 62a formed at the upper end of the main body portion 62 of the lower frame 60 as seen in FIG. 3. As a laterally outer corner portion of the upper flange portion 62a is formed to protrude frontward farther than the front end of a rear flange portion 21e which is formed at the rear end of the side wall portion 21a of the main side frame 21 and is shaped like a cross-sectionally circular arc, an interference may occur between the upper flange portion 62a of the lower frame 60 and the slanted portion 43 of the first cushion spring 40.

For this reason, according to this embodiment, as seen in FIG. 6, the inner space of one U-shaped portion 43a which constitutes the slanted portion 43 of the first cushion spring 40 overlaps the upper flange portion 62a of the lower frame 60 as viewed from the front-rear direction. Accordingly, interference between the upper flange portion 62a of the lower frame 60 and the slanted portion 43 of the first cushion spring 40 can be suppressed.

As seen in FIGS. 3 and 4, the first engagement portion 41 includes a base portion 41a configured to be bent in an approximately C-shaped configuration, a straight portion 41b extending downward from the base portion 41a, and an end portion 41c configured to be bent laterally inward from the straight portion 41b, and is formed as a whole to have an approximately C-shaped configuration which opens laterally inward. As viewed from the lateral direction, the end portion 41c of the first engagement portion 41 extends to a position overlapping the weld WP. As described above, since the end portion 41c of the first engagement portion 41 extends to the weld WP, it is possible to prevent the end portion 41c of the first engagement portion 41 from coming off the first engagement opening 21c.

Further, the end portion 41c of the first engagement portion 41 is disposed away from the weld WP and laterally inward relative to the weld WP. With this configuration, it is possible to prevent the end portion 41c of the first engagement portion 41 from interfering with the weld WP when the end portion 41c of the first engagement portion 41 is attached to the first engagement openings 21b, 21c, so that the attachment work for the first cushion spring 40 can be eased.

The lower side frame portion 61 has an upper edge (closer to the main side frame 21), and a relief portion 61 a configured to be recessed away from the lower first engagement opening 21c is formed at a portion facing the lower first engagement opening 21c. Further, the edge of the relief portion 61a is welded to the main side frame 21. With this configuration in which the welding is performed at the relief portion 61 a configured to be recessed away from the first engagement opening 21c, it is possible to prevent the first engagement opening 21c from being blocked partly by the weld WP (thickened portion).

Further, the front end of the lower side frame portion 61 has a flange portion 61b configured to protrude laterally inward. The flange portion 61b is formed to extend in an approximately upper-lower direction, and the upper end portion thereof extends toward the weld WP that is located at a position obliquely rearward and upward from the upper end portion, and is adjacent to the weld WP. With this configuration, the rigidity in the vicinity of the first engagement opening 21c can be enhanced by the flange portion 61b as well as by the weld WP; it is therefore possible to further prevent the main side frame 21 from degrading in rigidity along the imaginary line L.

Further, the end portion 41c of the first engagement portion 41 of the first cushion spring 40 as described above is also disposed away from the flange portion 61b of the lower side frame portion 61 in a laterally inward direction. With this configuration, it is possible to prevent the end portion 41c of the first engagement portion 41 from interfering with the flange portion 61b when the end portion 41c of the first engagement portion 41 is attached to the first engagement openings 21b, 21c. Accordingly, the attachment work for the first cushion spring 40 can be eased.

### <Details of Upper portion of Main side frame 21>

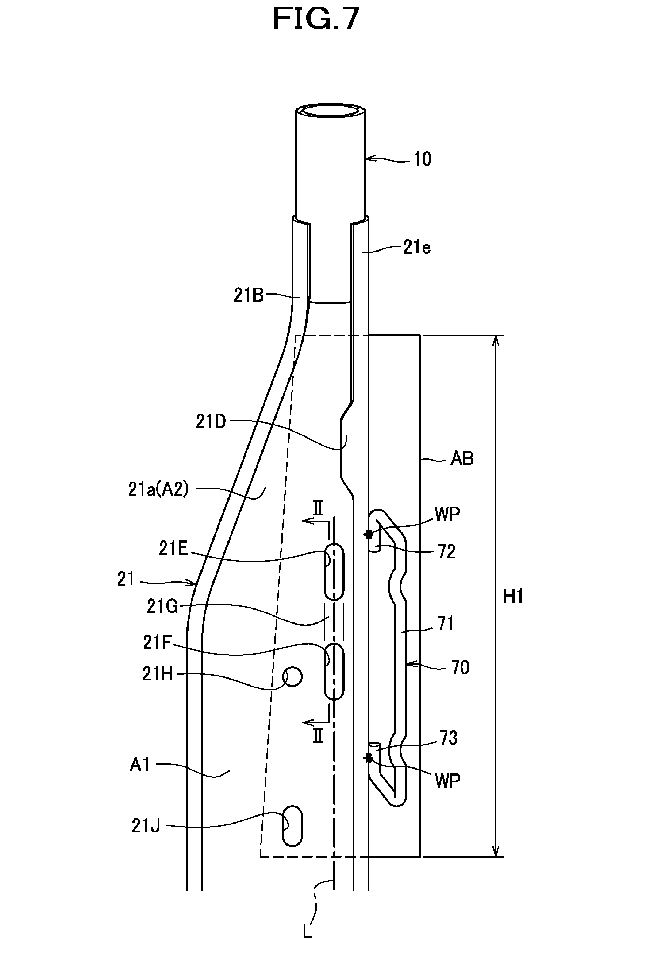

As seen in FIG. 7, the main side frame 21 mainly includes a side wall portion 21a having a lower portion A1 and an upper portion A2 of which the width thereof in the front-rear direction is narrower than that of at the lower portion A1, a front flange portion 21B made by bending the front end portion of the side wall portion 21a and extending laterally inward from the front end portion of the side wall portion 21a, and a rear flange portion 21e made by bending the rear end portion of the side wall portion 21a and extending laterally inward from the rear end portion of the side wall portion 21a. It is to be noted that the upper portion A2 of the side wall portion 21a indicates a portion which gradually narrows in width from an upper end of the lower portion A1 having a predetermined width in the front-rear direction and extends to the upper end of the side wall portion 21 a.

The front flange portion 21B is shaped like a cross-sectionally circular arc that is bent laterally inward and rearward, whereas the rear flange portion 21e is shaped like a cross-sectionally circular arc that is bent laterally inward and frontward. Further, a portion of the rear flange portion 21e corresponding to the upper portion A2 is provided with a frontward protruding portion 21 D configured to protrude frontward. With this configuration, because the portion of the rear flange portion 21e corresponding to the upper portion A2 can be enhanced by the frontward protruding portion 21D, it is possible to enhance the rigidity of the narrower upper portion A2 of the main side frame 21.

Further, the frontward protruding portion 21D is disposed in a position lower than the lower end of the upper frame 10. With this configuration, the rigidity of the main side frame 21 at a portion to which the upper frame 10 is not joined can be enhanced by the frontward protruding portion 21D.

Further, the frontward protruding portion 21D is provided in the same height range H1 as that of an air bag AB which is attached to the outer surface of the side wall portion 21 a. With this configuration, the rigidity of the side wall portion 21a can be enhanced at a portion to which the air bag AB is attached.

Further, a rod-like portion 70 for attachment of the air bag AB is provided approximately at a center portion of the rear flange portion 21e. The rod-like portion 70 includes a straight portion 71 extending in the upper-lower direction, an upper folded portion 72 folded downward from the upper end of the straight portion 71, and a lower folded portion 73 folded upward from the lower end of the straight portion 71.

The upper folded portion 72 and the lower folded portion 73 are joined to the rear flange portion 21e by welding. The frontward protruding portion 21D is provided adjacent to the weld WP joining the upper folded portion 72 and the rear flange portion 21e. With this configuration, since the rigidity of the frontward protruding portion 21D can be enhanced by the rod-like portion 70, it is possible to further enhance the rigidity of the upper portion of the main side frame 21.

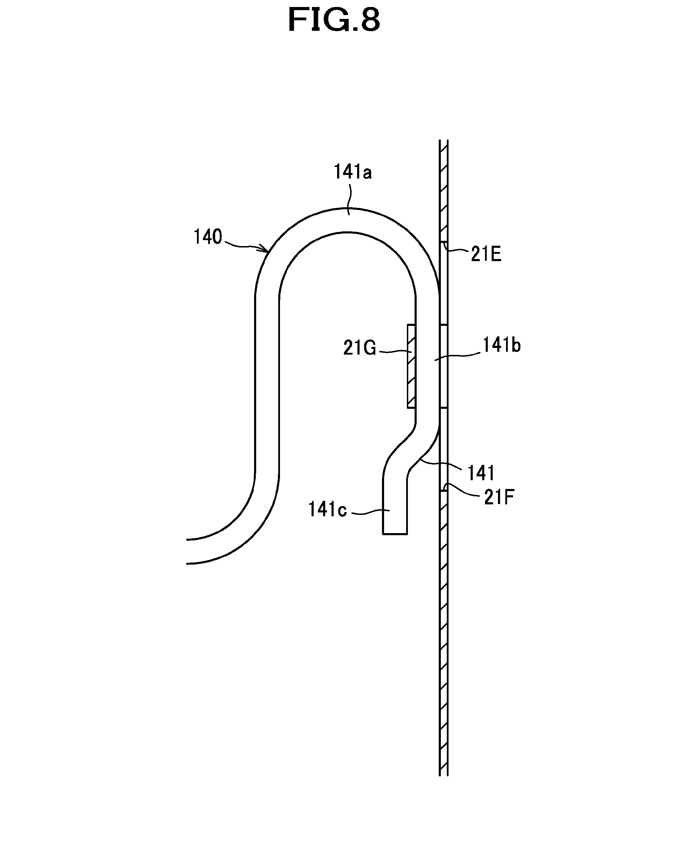

Further, as seen in FIGS. 7 and 8, the side wall portion 21a has two second engagement openings 21E, 21F formed therein with which a second engagement portion 141 formed at an end portion of the second cushion spring 140 is engaged. The two second engagement openings 21E, 21F are arranged in line approximately in the upper-lower direction in a region between two welds WP (*i.e.,* welds WP joining the rear flange portion 21e and the rod-like portion 70) and adjacent to the rear flange portion 21e. With this configuration, the rigidity in the vicinity of the two second engagement openings 21E, 21F can be enhanced by the rod-like portion 70.

Further, a recess portion 21G is formed between the two second engagement openings 21E, 21F; the recess portion 21G is recessed laterally inward. The recess portion 21G is formed in an approximately semi-cylindrical shape, and extends from the upper second engagement opening 21E to the lower second engagement opening 21F.

With this configuration in which the recess portion 21G is formed between the two second engagement openings 21E, 21F, the protrusion distance (protrusion distance is zero in this embodiment) by which the second engagement portion 141 of the second cushion spring 140 protrudes outward from the outer surface of the main side frame 21 can be reduced. It is therefore possible to reduce the size of the car seat S in the lateral direction.

The second cushion spring 140 is an S-shaped spring *(see* FIG. 2) extending laterally with a plurality of turns made in the upper-lower direction, and each end portion of the second cushion spring 140 has the second engagement portion 141. The second engagement portion 141 includes a base portion 141 a configured to be bent in an approximately C-shaped configuration, a straight portion 141b extending downward from the base portion 141a, and an end portion 141c configured to be bent laterally inward from the straight portion 141b, and is formed as a whole to have an approximately C-shaped configuration which opens laterally inward.

Further, attachment holes 21H, 21J for attachment of the air bag AB are formed approximately in a laterally center portion of the lower portion A1 of the side wall portion 21a. In other words, the attachment holes 21H, 21J are disposed at positions away from an imaginary line L extending through the two second engagement openings 21E, 21F. With this arrangement of the attachment holes 21H, 21J, for example, as compared with the configuration in which the attachment holes 21H, 21J are disposed on the imaginary line L, the rigidity in the vicinity of the second engagement openings 21E, 21F can be enhanced.

Although one embodiment of the present invention has been described above, the present invention is not limited to this embodiment and may be carried out into practice in various other ways, as will be described below. In the following description, structural parts similar to those previously described in the above-described embodiment are denoted by the same reference numerals and detailed description thereof will be omitted.

In the above-described embodiment, the present invention has been applied to the side frames 20 of the seat back frame F2. However, the present invention is not limited to this configuration; for example, the present invention may be applied to side frames of the seat cushion frame. Further, the first member and the second member are not limited to the parts shown in the above-described embodiment; as long as the first member and the second member constitute the side frames, any members may be the first member and the second member.

In the above-described embodiment, the first cushion spring 40 has been described as an S-shaped spring. However the present invention is not limited to this configuration, and any known spring may be used as the first cushion spring 40 as long as it is made by bending a wire.

In the above-described embodiment, the car seat S used for an automobile has been exemplified as an example of a vehicle seat. However, the present invention is not limited to the car seat, and may be applied to other vehicle seat, such as a seat for a marine vessel or an aircraft.

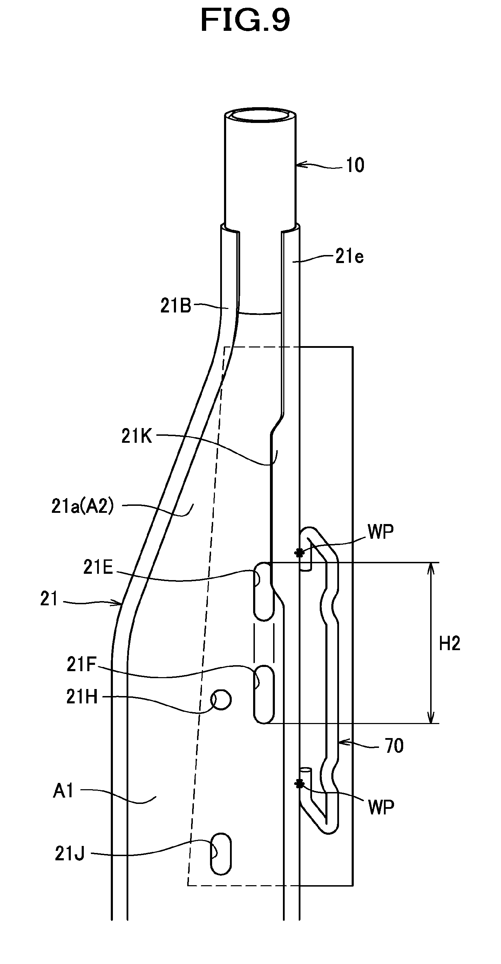

The frontward protruding portion is not limited to the specific shape and arrangement as shown in the above-described embodiment, and various shapes and arrangements thereof may be made. For example, as seen in FIG. 9, the frontward protruding portion 21K may be longer in the upper-lower direction than the frontward protruding portion 21D according to the above-described embodiment such that a portion of the frontward protruding portion 21K is disposed in the same height range H2 as that of the two second engagement openings 21E, 21F. It is to be noted that the term "same height range H2 as that of the two second engagement openings 21E, 21F" indicates the range from the upper end of the upper second engagement opening 21E to the lower end of the lower second engagement opening 21F.

With this configuration, the rigidity in the vicinity of the second engagement openings 21E, 21F can be enhanced by the frontward protruding portion 21K. If the two second engagement openings are formed in the upper portion of the side wall portion, the entire frontward protruding portion may be disposed in the same height range as that of the two second engagement openings.

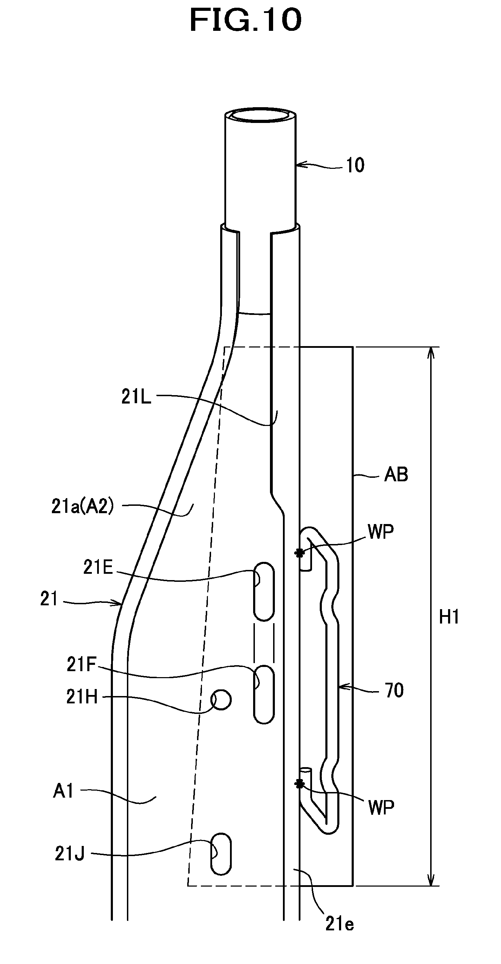

Further, as seen in FIG. 10, the frontward protruding portion 21L may be formed in a predetermined range defined by the upper end of the rear flange portion 21e. In this configuration, since the joint strength between the upper end portion of the main side frame 21 and the upper frame 10 can be enhanced, it is possible to enhance the rigidity in the vicinity of the upper end of the main side frame 21.

Further, according to the embodiment shown in FIG. 10, the frontward protruding portion 21L is longer than the length from the upper end of the rear flange portion 21e to the lower end of the upper frame 10. With this configuration, the frontward protruding portion 21L, to which the upper frame 10 has been joined to enhance the rigidity, can reinforce a portion of the main side frame 21 which is not joined to the upper frame 10.

Further, in the embodiment shown in FIG. 10, a portion of the frontward protruding portion 21L is disposed in the same height range H1 as that of the air bag AB. With this configuration too, as with the above-described embodiment, it is possible to enhance the rigidity of a portion of the side wall portion 21a to which the air bag AB is attached.

In the above-described embodiment, the second cushion spring 140 has been described as an S-shaped spring. However, the present invention is not limited to this configuration, and any known spring may be used as the second cushion spring 140 as long as it is made by bending a wire.

It is to be noted that the seat cushion of the car seat may have a structure, such as one described below, without limitation of the structure of the seat cushion as shown in the above-described embodiment.

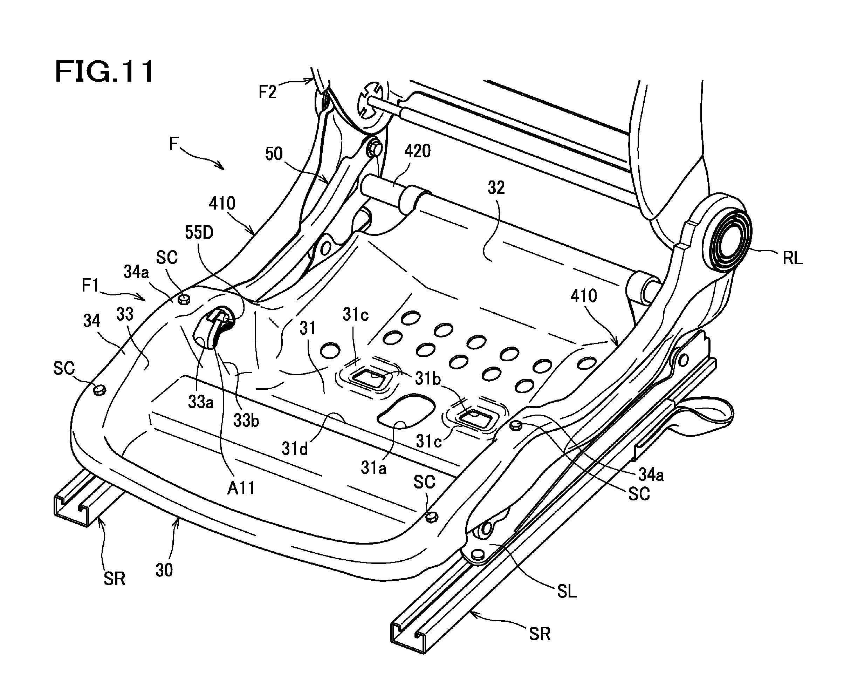

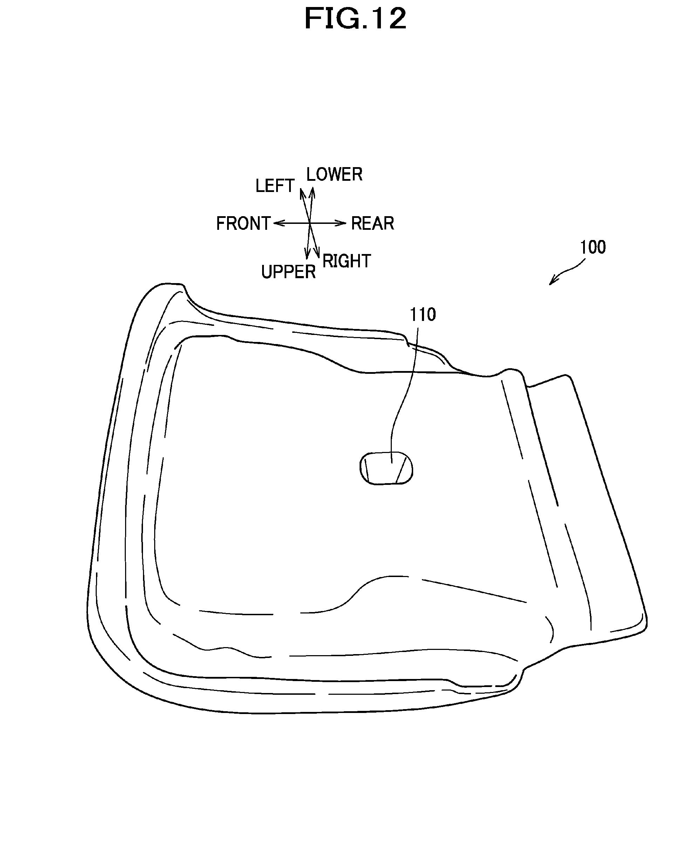

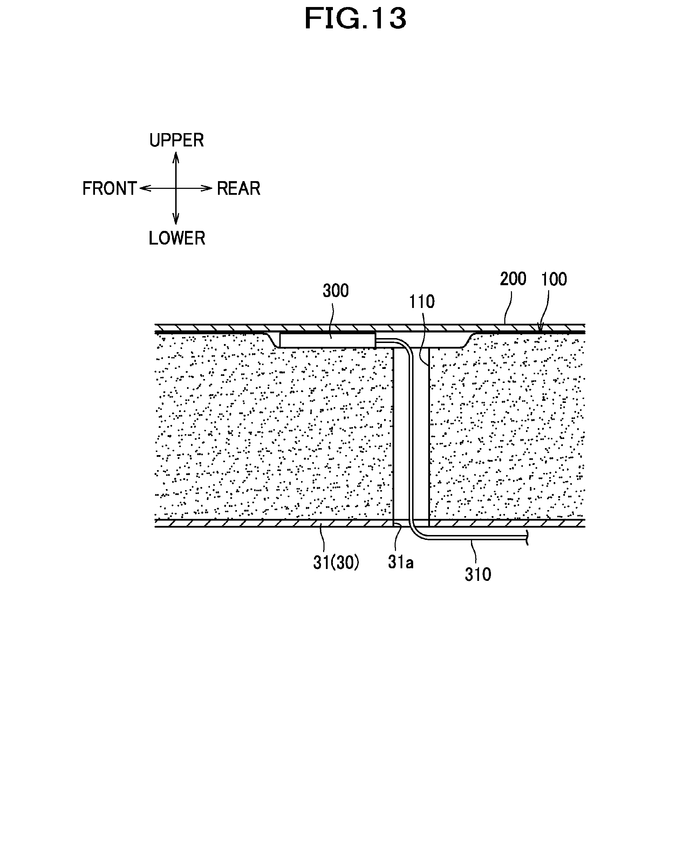

As seen in FIG. 11, the seat cushion according to this embodiment is configured such that the seat cushion frame F1 is covered by a seat cushion pad 100 *(see* FIG. 12) made of a cushion material such as urethane foam, and a skin material 200 *(see* FIG. 13) made of synthetic leather, fabric or the like.

Provided between the above-described seat cushion pad 100 and the skin material 200 is a seating sensor 300 (*see* FIG. 13) configured to detect an occupant seating on the seat cushion S1.

The seat cushion frame F1 is installed on sliders SL; the sliders SL are configured to be supported by a pair of right and left slide rails SR provided on a floor of the automobile and to be movable in the front-rear directions relative to the slide rails SR. Accordingly, the front-rear position of the car seat S is adjustable.

Next, the seat cushion frame F1 and the seat cushion pad 100 will be described in detail.

The seat cushion frame F1 mainly includes a pair of right and left side frames 410, a connecting pipe 420 configured to connect the rear end portions of the side frames 410, and a pan frame 30 configured to connect the front portions of the respective side frames 410 and the connecting pipe 420.

The right and left side frames 410 are frames extending in the front-rear direction and made of metal; the right and left side frames 410 are laterally spaced apart from each other. A front portion of the pan frame 30 is fixed to an approximately front-half portion of each of the right and left side frames 410 by screws SC, and the connecting pipe 420 is fixed to a rear end portion of each of the right and left side frames 410 by welding.

The connecting pipe 420 is a cylindrical pipe extending laterally and made of metal; a rear end portion of the pan frame 30 is engaged from above with an approximately center portion of the connecting pipe 420 and thus fixed thereto.

The pan frame 30 is an approximately box-like member which opens upward and is made of metal or plastic; the pan frame 30 is formed to extend in a direction from the front end to the rear end of the seat cushion pad 100 shown in FIG. 12. In other words, the pan frame 30 is formed to support approximately the entire lower surface of the seat cushion pad 100.

The right and left side frames 410 and the pan frame 30 are covered by the seat cushion pad 100. Accordingly, the seat cushion pad 100 is supported from below by the side frames 410 and the pan frame 30.

To be more specific, the pan frame 30 mainly includes a bottom wall portion 31, a rear wall portion 32, right and left side wall portions 33 (only the right side wall portion is shown in the figure), a front wall portion (not shown), and flanges 34.

The bottom wall portion 31 is formed to extend approximately the entire lower surface of the seat cushion pad 100, and a pan frame-side through-opening 31a in the form of an elongate opening extending in the front-rear direction is formed approximately in the center portion of the bottom wall portion 31 to open in the upper-lower direction. On the other hand, a pad-side through-opening 110 is formed approximately in the center portion of the seat cushion pad 100 to open in the upper-lower direction; the pad-side through-opening 110 is shaped to match the pan frame-side through-opening 31a, that is in the form of an elongate opening extending in the front-rear direction.

Further, as seen in FIG. 13, in a state where the seat cushion pad 100 is placed on the pan frame 30, the pan frame-side through-opening 31a and the pad-side through-opening 110 overlap each other as viewed in the upper-lower direction. A harness member 310 for the seating sensor 300 is inserted into these two through-openings 31a, 110.

As described above, since the harness member 310 for the seating sensor 300 can be passed from the upper side of the seat cushion pad 100 and pulled out from the lower side of the pan frame 30 through the two through-openings 31a, 110, the wiring path for the harness member 310 can be simplified.

As a structure in which through-openings are not formed in the pan frame and the seat cushion pad is disclosed, for example, in Japanese Laid-open Patent Application, Publication No. 2004-306869. More specifically, in this structure, the pan frame extends from the front end side to the rear end side of the seat cushion pad to support the seat cushion pad. In this structure, if a seating sensor is provided on the seat cushion pad, the harness member for the seating sensor has to be wired, and the wiring path for the harness member will disadvantageously be complicated because the pan frame becomes an obstacle.

In contrast, according to the structure in this embodiment, since the harness member 310 can be inserted from the upper side of the seat cushion pad 100 and pulled out from the lower side of the pan frame 30 through the through-openings 31a, 110, the wiring path for the harness member 310 can be simplified.

Further, since the pan frame-side through-opening 31 a is formed as an elongate opening extending in the front-rear direction, even if the occupant seated on the seat cushion pad 100 moves frontward or rearward, and the seat cushion pad 100 deforms accordingly to cause the harness member 310 located in the pad-side through-opening 110 to move frontward or rearward, it is possible to prevent the harness member 310 from interfering with the edge of the pan frame-side through-opening 31a. This can prevent the damage of the harness member 310.

Further, since the pad-side through-opening 110 is shaped to match the pan frame-side through-opening 31a, an operation (wiring operation) for inserting the harness member 310 through the two through-openings 31 a, 110 can be easily performed.

As seen in FIG. 11, two attachment openings 31b for attachment of the skin material 200 are formed in the bottom wall portion 31 of the pan frame 30 at right and left sides of the pan frame-side through-opening 31a. Each of the attachment openings 31b is shaped like a trapezoid whose lateral distance is narrower as the distance from the front side toward the rear side thereof increases; the attachment openings 31b are arranged to sandwich the rear portion of the pan frame-side through-opening 31a. In other words, these openings 31a, 31b are arranged such that the center of each attachment opening 31b and the center of the pan frame-side through-opening 31a are shifted in the front-rear direction.

A trapezoidal annular bead 31c (protruding portion) is provided around each of the attachment openings 31b to protrude upward from the bottom wall portion 31 along the attachment opening 31b. A portion of the annular bead 31c (*i.e.,* the laterally inner front portion) is disposed between the pan frame-side through-opening 31 a and the attachment openings 31b, more specifically, adjacent to the pan frame-side through-opening 31a and the attachment openings 31b. With this configuration, the rigidity of the pan frame 30 at positions around the pan frame-side through-opening 31a and around the attachment openings 31b can be enhanced by the single annular bead 31c.

As each of the annular beads 31c is shaped like a trapezoid, the laterally inner portion thereof is positioned laterally inward as the distance from the rear side toward the front side thereof increases. In other words, the laterally inner portions of the annular beads 31c are formed to approach the pan frame-side through-opening 31a as the distance thereof increases toward the front side, so that the pan frame-side through-opening 31a can be effectively reinforced by the annular beads 31 c.

Further, a bent portion 31 d having an L-shaped cross-section is provided by bending the bottom wall portion 31 downward at a position frontward of the pan frame-side through-opening 31 a. The bent portion 31 d extends laterally and is connected to the right and left side wall portions 33. Accordingly, the rigidity in the vicinity of the pan frame-side through-opening 31a can also be enhanced by the bent portion 31 d.

The rear wall portion 32 is formed to extend obliquely rearward and upward from the rear end of the bottom wall portion 31, and the upper end portion thereof is shaped like a hook that is bent along the peripheral surface of the connecting pipe 420. Accordingly, the upper end portion of the rear wall portion 32 is engaged with the connecting pipe 420.

The side wall portions 33 are formed to extend obliquely from the right and left ends of the bottom wall portion 31 such that they extend laterally outward and upward. Provided between the side wall portions 33 and the side frames 410 is a height adjustment mechanism 50 configured to adjust the height of the seat cushion frame F1.

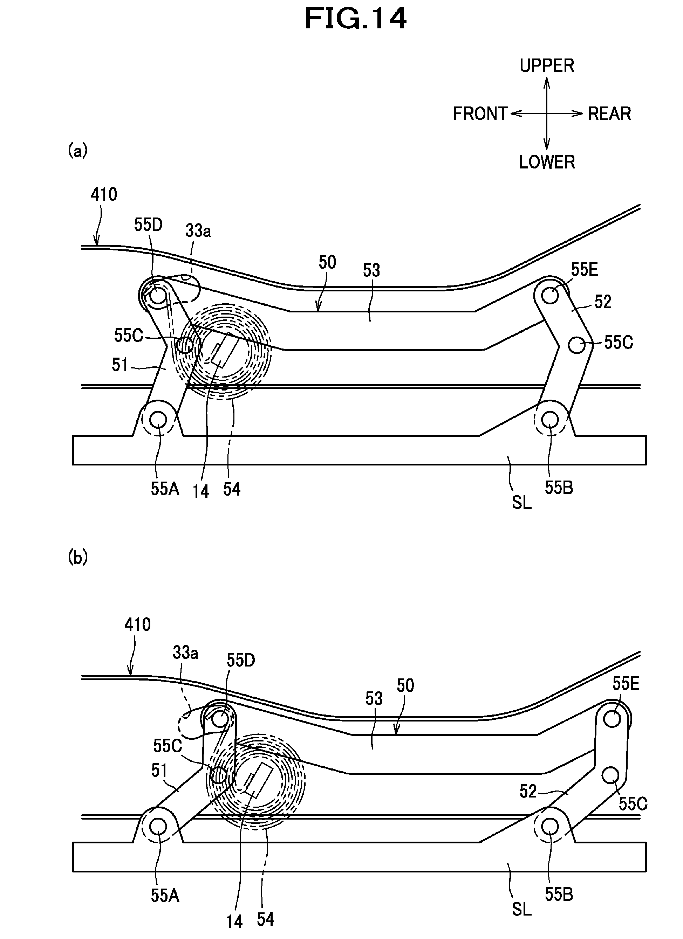

As seen in FIGS. 14 (a) and 14(b), the height adjustment mechanism 50 is provided laterally inward of the right and left side frames 410, and mainly includes in pairs a front link 51, a rear link 52, an upper link 53, a slider SL (lower link), and a spiral spring 54 (urging member). The front link 51 and the rear link 52 are each shaped like a "V", and the lower ends thereof are rotatably connected to a front end portion and a rear end portion of the slider SL, respectively, via a front lower connecting shaft 55A and a rear lower connecting shaft 55B, whereas center portions (portions corresponding to valleys of Vs) are rotatably connected to the side frame 410 via center-side connecting shafts 55C.

Accordingly, a four-bar linkage is formed by the side frame 410, the lower half portions of the front link 51 and the rear link 52, and the slider SL, so that tilting the front link 51 and the rear link 52 frontward or rearward causes the side frame 410 to move upward or downward.

Further, upper end portions of the front link 51 and the rear link 52 are rotatably connected to the upper link 53 via a front upper connecting shaft 55D and a rear upper connecting shaft 55E, respectively. Accordingly, a four-bar linkage is formed also by the front link 51, the rear link 52, the upper link 53, and the slider SL, so that tilting the front link 51 and the rear link 52 frontward or rearward causes the upper link 53 to move upward or downward together with the side frame 410.

The spiral spring 54 is a spring for urging the front link 51 in such a direction as to raise the front link 51 (*i.e.,* direction in which the seat cushion frame F1 is raised); the spiral spring 54 is disposed laterally inward of the front link 51 and the upper link 53, and the end thereof that is located closer to the center of the spiral spring 54 is engaged with a spring engagement portion 14 formed on the side frame 410 whereas the outer end thereof is engaged with the front upper connecting shaft 55D. Further, the front link 51 is configured to be tilted frontward or rearward when a driving force from an operating lever (not shown) is transmitted to the front link 51.

In the height adjustment mechanism 50 configured as described above, if the side frame 410 is to be lowered, the occupant manipulates the operating lever in one direction to tilt the front link 51 rearward against the urging force of the spiral spring 54 to thereby lower the side frame 410. On the contrary, if the side frame 410 is to be lifted, the occupant manipulates the operating lever in the other direction to raise the front link 51 in the frontward direction to thereby raise the side frame 410. In this operation, when the occupant manipulates the operating lever in the other direction, the manipulation of the operating lever is assisted by the spiral spring 54.

Further, the above-described front upper connecting shaft 55D is formed to protrude laterally inward of the spiral spring 54. In other words, the laterally inward end portion of the front upper connecting shaft 55D is located at a laterally innermost position among the constituent parts of the height adjustment mechanism 50.

As seen in FIGS. 11 and 14, a through-opening 33a configured to face the front upper connecting shaft 55D in the lateral direction is formed in the side wall portion 33 of the pan frame 30. The through-opening 33a is a relief portion for preventing interference between the front upper connecting shaft 55D and the side wall portion 33 of the pan frame 30, and is formed to have a shape corresponding to the moving trajectory of the front upper connecting shaft 55D with respect to the pan frame 30.

In other words, the through-opening 33a is shaped like a circular arc whose center coincides with an axis of the front center-side connecting shaft 55C. With this configuration, regardless of the position of the height adjustment mechanism 50 *(see* FIGS. 14 (a) and 14(b)), interference between the front upper connecting shaft 55D and the side wall portion 33 can be prevented. Further, for example, as compared with the configuration in which the through-opening is not formed, providing the through-opening 33a makes it possible to reduce the distance between the side wall portion 33 and the height adjustment mechanism 50, so that the size of the car seat S can be reduced in the lateral direction.

As a structure in which a through-opening is not formed in the pan frame is disclosed, for example, in Japanese Laid-open Patent Application, Publication No. 2004-306869. More specifically, in this structure, the vehicle seat includes the pan frame in the form of an approximately box-like configuration which opens upward and rearward and configured to support the pan frame. It may be conceivable that the height adjustment mechanism for adjusting the height of the vehicle seat (see, for example, JP2006-182039A1) is provided in the vehicle seat including the pan frame having no through-opening. To be more specific, it may be conceivable that the height adjustment mechanism is provided adjacent to the right and left side walls of the approximately box-like pan frame. However, in this configuration, the height adjustment mechanism has to be spaced apart from the right and left side walls of the pan frame in order to prevent interference between the pan frame and the height adjustment mechanism. This disadvantageously leads to an increase in the size of the vehicle seat in the lateral direction.

In contrast, according to the structure in this embodiment, since the distance between the pan frame30 and the height adjustment mechanism 50 can be reduced by the through-opening 33 as described above, the size of the car seat S can be reduced in the lateral direction.

Further, since the through-opening 33a is formed to have a shape corresponding to the moving trajectory of the front upper connecting shaft 55D, for example, as compared with the structure in which the through-opening is larger than the shape corresponding to the moving trajectory of the front upper connecting shaft, it is possible to enhance the rigidity of the pan frame 30 because the size of the through-opening 33a may be reduced to the minimum size required to prevent the interference.

Further, the through-opening 33a has a front end portion and a rear end portion, and the front end portion is located in a position lower than the rear end portion; the above-described bent portion 31d of the bottom wall portion 31 is disposed directly below the lowermost end portion A11 of the front end portion. With this configuration, the portion from the lowermost end portion A11 of the through-opening 33a to the bottom wall portion 31, at which the distance from the lower edge of the through-opening 33a to the bottom wall portion 31 is the shortest, can be reinforced by the bent portion 31d.

Further, the through-opening 33a is formed to extend across the ridge line of a bent portion 33b; the bent portion 33b is formed by bending the side wall portion 33 into an approximately V-shape so as to protrude in the lateral direction. With this configuration, the rigidity of the portion around the through-opening 33a can also be enhanced by the bent portion 33b.

The flange 34 is formed to extend outward from the upper edge of the front wall portion (not shown) extending obliquely frontward and upward from the front end of the bottom wall portion 31 as well as from the upper edge of the right and left side wall portions 33. Further, a portion 34a of the flange 34 that is located above the through-opening 33a is fastened to the side frame 410 by a screw SC. With this configuration, the rigidity in the vicinity of the through-opening 33a of the pan frame 30 can also be enhanced by the portion fastened by the screw SC.

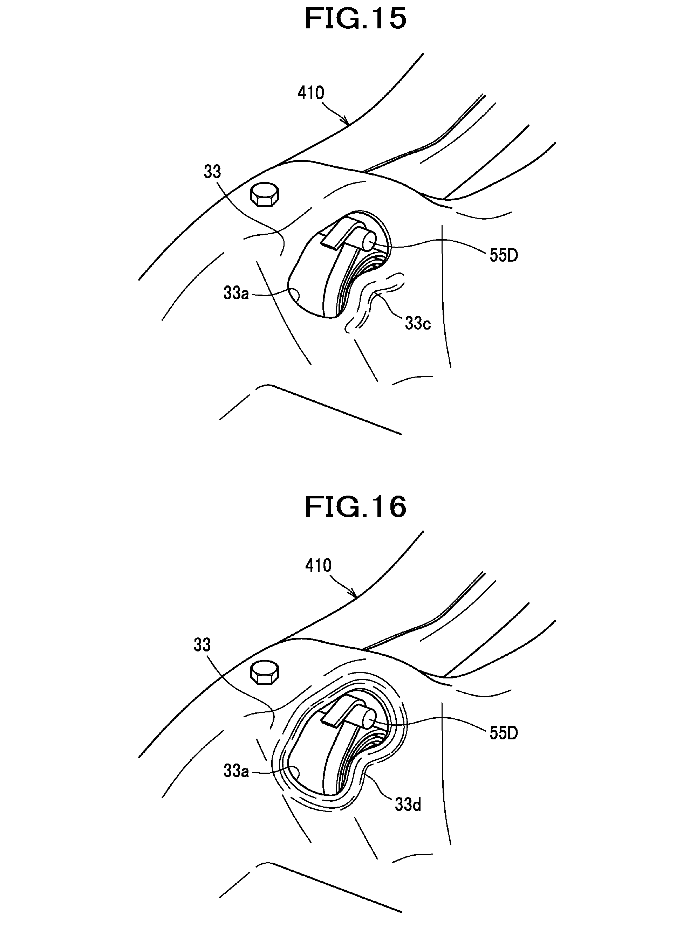

In the above-described embodiment, the reinforcement in the vicinity of the through-opening 33a has been made by the bent portion 31d, the bent portion 33b, and the portion fastened by the screw SC. However, the present invention is not limited to this configuration. For example, as seen in FIG. 15, a bead portion 33c (protruding portion) protruding from the side wall portion 33 may be provided adjacent to the through-opening 33a along the lower edge of the through-opening 33a. With this configuration, the rigidity in the vicinity of the through-opening 33a of the pan frame 30 can be enhanced by the bead portion 33c.

Further, as seen in FIG. 16, a bead portion 33d may be formed to surround and extend along the through-opening 33a. With this configuration, the rigidity in the vicinity of the through-opening 33a of the pan frame 30 can be enhanced by the annular bead portion 33d.

The protruding portion for enhancing the rigidity in the vicinity of the through-opening 33a is not limited to the above-described bead portion 33c, 33d; for example, if the pan frame is made of plastic, the protruding portion may be a solid protrusion.

In the above-described embodiment, the through-opening 33a has been formed in each of the right and left side wall portions 33. However, the present invention is not limited to this configuration, the through-opening may be formed in at least one of the side wall portions. It is to be noted that even if the through-opening is formed only in one of the side wall portions, for example, as compared with the configuration in which the through-opening is not formed in any of the right and left side wall portions, the size of the car seat can be reduced in the lateral direction.

In the above-described embodiment, the bent portion 31 d has been disposed directly below the lowermost end portion A11 of the through-opening 33a. However, the present invention is not limited to this configuration, and as long as the bent portion is disposed below the through-opening, the bent portion may be disposed in any position.

In the above-described embodiment, the through-opening 33a has been formed as a circular arc-shaped elongate opening. However, the present invention is not limited to this configuration, for example, the through-opening may be a circular opening or a polygonal opening.

In the above-described embodiment, the spiral spring 54 has been exemplified as the urging member. However, the present invention is not limited to this configuration, and a torsion spring or a coil spring may be used as the urging member.

In the above-described embodiment, the flange 34 and the side frame 410 have been fixed by fastening means using the screw SC. However, the present invention is not limited to this configuration, and the flange 34 and the side frame 410 may be fixed by welding or the like.

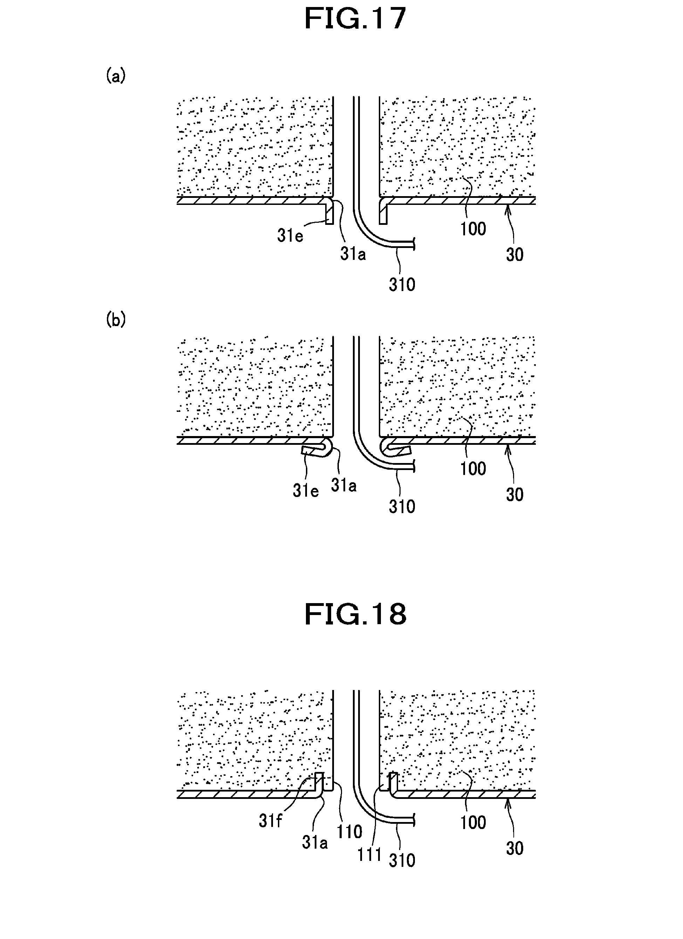

In the above-described embodiment, the reinforcement around the pan frame-side through-opening 31a has been performed by the annular beads 31c. However, the present invention is not limited to this configuration. For example, as seen in FIG. 17(a), a flange portion 31e made by bending downward may be formed at the edge of the pan frame-side through-opening 31a. With this configuration, the rigidity in the vicinity of the pan frame-side through-opening 31a of the pan frame 30 can be enhanced by the flange portion 31e. Further, as the formation of the flange portion 31e can prevent a burr formation at the edge of of the pan frame-side through-opening 31a, it is possible to prevent the harness member from being damaged.

If the flange portion 31e is bent downward as seen in FIG. 17(a), it is preferable that as seen in FIG. 17(b), the flange portion 31e is bent in a direction away from the pan frame-side through-opening 31a after it is bent downward. This configuration makes it possible to prevent the harness member 310 from being caught by the front end of the flange portion 31e. Accordingly, the damage of the harness member 310 can be prevented.

Further, as seen in FIG. 18, the flange portion 31f may be formed to be bent upward. In this instance, it is preferable that the pad-side through-opening 110 is disposed inward of the flange portion 31 f and that a portion 111 of the seat cushion pad 100 which is located around the pad-side through-opening 110 is disposed within the pan frame-side through-opening 31a (within the annular flange portion 31f). With this configuration, since the portion 111 of the seat cushion pad 100 which is located around the pad-side through-opening 110 is disposed within the pan frame-side through-opening 31 a, the interference between the harness member 310 and the pan frame 30 can be prevented, and therefore it is possible to prevent the harness member 310 from being damaged.

In the above-described embodiment, each of the pad-side through-opening 110 and the pan frame-side through-opening 31a has been formed as an elongate opening. However, the present invention is not limited to this configuration; for example, each of the through-openings may be a circular opening or a polygonal opening, and the size and/or the shape of the through-openings may be different from each other. Further, as long as the through-openings overlap each other as viewed in the upper-lower direction, the arrangement of the through-openings may be determined as desired.

In the above-described embodiment, the reinforcement around the attachment openings 31b and the reinforcement around the pan frame-side through-opening has been made by the annular bead 31c. However, the present invention is not limited to this configuration, and the reinforcement bead may be provided at least at a portion between the attachment opening and the pan frame-side through-opening. Further, the protruding portion protruding from the pan frame for the purpose of reinforcement around the pan frame-side through-opening is not limited to the above-described annular bead 31 c. For example, if the pan frame is made of plastic, the protruding portion may be a solid protrusion. Further, the protruding portion may be provided adjacent to the pan frame-side through-opening only.

## Claims

1. A vehicle seat comprising:
right and left side frames including first members and a second member which are joined together by welding; and
a first cushion spring run between right and left first members and configured to receive a load from an occupant,
wherein each of the first members has two first engagement openings formed therein with which a first engagement portion formed at an end portion of the first cushion spring is engaged, and
wherein a weld joining the first member and the second member is disposed on an imaginary line extending through the two first engagement openings.

2. The vehicle seat according to claim 1, wherein an end of the first engagement portion of the first cushion spring and the weld overlap each other as viewed from a lateral direction.

3. The vehicle seat according to claim 1 or 2, wherein an end of the first engagement portion of the first cushion spring is disposed away from and laterally inward relative to the weld.

4. The vehicle seat according to any one of claims 1 to 3, wherein the second member has an end edge closer to the first member, and includes a relief portion configured to be recessed away from the first engagement opening and formed at a portion of the end edge which faces the first engagement opening, and
wherein the second member is welded to the first member at the relief portion.

5. The vehicle seat according to any one of claims 1 to 4, wherein the second member includes a flange portion protruding laterally inward at a position adjacent to the weld.

6. The vehicle seat according to claim 5, wherein an end of the first engagement portion of the first cushion spring is disposed away from the flange portion and laterally inward relative to the flange portion.

7. The vehicle seat according to claim 1, wherein the right and left side frames constitute a seat back frame, and the first member is a plate frame comprising a side wall portion having an upper portion and a lower portion, a width of the upper portion in a front-rear direction being narrower than that of the lower portion,
wherein the side wall portion includes a laterally inwardly bent rear flange portion formed at a rear end portion thereof, and
wherein the rear flange portion includes a frontward protruding portion configured to protrude frontward, in a region corresponding to the upper portion.

8. The vehicle seat according to claim 7, wherein the upper portion of the plate frame is joined to an upper frame made of a pipe, and
wherein at least a portion of the frontward protruding portion is disposed in a position lower than a lower end of the upper frame.

9. The vehicle seat according to claim 7 or 8, wherein at least a portion of the frontward protruding portion is provided in a same height range as that of an air bag attached to the side wall portion.

10. The vehicle seat according to claim 9, wherein a rod-like member for attachment of the air bag is welded to the rear flange portion, and
wherein the frontward protruding portion is provided adjacent to a weld joining the rod-like member and the rear flange portion.

11. The vehicle seat according to any one of claims 7 to 10, further comprising a second cushion spring run between the side wall portions of the right and left plate frames and configured to receive a load from the occupant,
wherein each of the side wall portions has two second engagement openings formed therein with which a second engagement portion formed at an end portion of the second cushion spring is engaged, and
wherein at least a portion of the frontward protruding portion is provided in a same height range as that of the two second engagement openings.

12. The vehicle seat according to claim 11, wherein the side wall portion has an attachment hole formed therein for attachment of an air bag, and
wherein the attachment hole is disposed at a position away from an imaginary line extending through the two second engagement openings.

13. The vehicle seat according to any one of claims 7-12, wherein the frontward protruding portion is formed in a predetermined range defined by an upper end of the rear flange portion.
